(19) **Europäisches Patentamt / European Patent Office / Office européen des brevets**

(11) **EP 1 694 133 B1**

(12) **EUROPEAN PATENT SPECIFICATION**

(45) Date of publication and mention
of the grant of the patent:
**12.03.2008 Bulletin 2008/11**

(21) Application number: **04806078.4**

(22) Date of filing: **15.12.2004**

(51) Int Cl.:
*A23G 3/00* (2006.01)   *A23G 9/00* (2006.01)
*A23G 9/04* (2006.01)   *A23G 9/08* (2006.01)
*A23G 9/16* (2006.01)

(86) International application number:
**PCT/GB2004/005264**

(87) International publication number:
**WO 2005/058055 (30.06.2005 Gazette 2005/26)**

(54) **METHODS FOR THE PRODUCTION OF FROZEN AERATED CONFECTIONS**

VERFAHREN ZUR HERSTELLUNG VON GEFRORENEN GESCHÄUMTEN SÜSSWAREN

PROCEDES DE PRODUCTION DE CONFISERIES GONFLEES CONGELEES

(84) Designated Contracting States:
**AT BE BG CH CY CZ DE DK EE ES FI FR GB GR HU IE IS IT LI LT LU MC NL PL PT RO SE SI SK TR**

(30) Priority: **18.12.2003 EP 03257994**

(43) Date of publication of application:
**30.08.2006 Bulletin 2006/35**

(73) Proprietors:
• **UNILEVER PLC**
**London, Greater London EC4P 4BQ (GB)**
Designated Contracting States:
**CY GB IE**
• **UNILEVER N.V.**
**3013 AL Rotterdam (NL)**
Designated Contracting States:
**AT BE BG CH CZ DE DK EE ES FI FR GR HU IS IT LI LT LU MC NL PL PT RO SE SI SK TR**

(72) Inventors:
• **BUTLER, Michael Francis,**
**Unilever I. P. Group**
**Bedford Bedfordshire MK44 1LQ (GB)**

• **HODDLE, Andrew,**
**Unilever Intellectual Prop. Group**
**Bedford Bedfordshire MK44 1LQ (GB)**
• **MUGNIER, Jean-Yves,**
**Unilever Intellec. Prop. Group**
**Bedford Bedfordshire MK44 1LQ (GB)**
• **WATSON, Caroline Anne,**
**Unilever Int. Prop. Group**
**Bedford Bedfordshire MK44 1LQ (GB)**

(74) Representative: **Hugot, Alain**
**Unilever Patent Group**
**Colworth House**
**Sharnbrook**
**Bedford, MK44 1LQ (GB)**

(56) References cited:
**EP-A- 1 449 441       US-A1- 2003 104 004**
**US-B1- 6 187 365**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 694 133 B1

## Description

### Technical Field of the invention

The invention relates to frozen aerated confections and methods producing them. More specifically, the invention relates to methods for aerating quiescently frozen confections.

### Background to the invention

Water ice and milk ice products are popular frozen confections. Unaerated frozen confections, such as ice-lollies are conventionally produced by quiescent freezing. In a typical process, the ingredients are mixed, the mix is placed in a mould and the mould is cooled, usually by immersion in a refrigerant. This method has the advantage of being simple and cheap. On the other hand, aerated frozen confections such as ice cream and sorbet are conventionally produced using an ice cream freezer (i.e. a scraped surface heat exchanger). In the ice cream freezer air is injected into the mix as it is beaten and frozen. The beater breaks the air up into small bubbles. The mix cannot be completely frozen in the freezer (since it would set solid) so it is normally drawn from the freezer in a partially frozen state, and placed in a hardening tunnel or blast freezer to complete the freezing process. This process successfully produces frozen aerated confections, but requires expensive and complex equipment.

US-B-6 187 365 discloses a process for the production of a moulded aerated frozen bar and US-A-2003/0104004 aerated ice creams having an overrun of 20 to 400%.

It is not possible to produce aerated water ices by simply pre-aerating a mix and then quiescently freezing it, unless some means for stabilising the gas bubbles is provided. This is because as the ice forms, the gas bubbles rise to the surface and are lost from the mix, and products with only very low levels of aeration are achieved. JP 62 296851 describes a process for producing a frozen aerated confection in which carbon dioxide is generated from the reaction between a carbonate and an acid. Gelling stabilisers to encapsulate and thus stabilise the bubbles of carbon dioxide. The mixture is subsequently quiescently frozen, and the gel structure prevents the gas from being lost during freezing. However this method has the disadvantage that the presence of relatively high amounts of stabiliser, particularly in the form of a gel, gives the frozen aerated product an undesirable chewy, gummy texture.

Thus there remains a need for a simple, inexpensive method of producing aerated frozen confections, such as aerated water ices, without compromising on their texture.

### Tests and definitions

Unless defined otherwise, all technical and scientific terms used herein have the same meaning as commonly understood by one of ordinary skill in the art of frozen confectionery manufacture. Definitions and descriptions of various terms and techniques used in frozen confectionery manufacture are found in Ice Cream, 4th Edition, Arbuckle (1986), Van Nostrand Reinhold Company, New York, NY.

Water ices are frozen confections that contain sugar, water, fruit, fruit juice or fruit flavouring, fruit acid or other acidifying agent, stabiliser and colour, but little or no fat or milk protein. They have a total solids content of 5 to 35%, typically 10 to 20%.

Milk ices are frozen confections similar to water ices, but in addition they contain milk protein (up to about 5%) and a small amount of fat (typically 2-4%).

Frozen yoghurt is a frozen fermented dairy product that contains milk protein, fat, sugar and water. Frozen yoghurt is acidic.

Quiescent freezing means freezing without agitation. Examples of quiescent freezing processes include freezing a mix in a mould which is immersed in a bath of a chilled refrigerant, such as brine, or placed in a low temperature environment, such as a freezer; and immersing mix directly in a cryogenic liquid, such as liquid nitrogen.

Partial slush freezing means freezing with agitation, for example in a scraped surface heat exchanger, to a temperature (typically -1 to -7°C) at which some, but not all, of the ice that will be present in the product at its final temperature (typically-18°C) is formed.

An aerated confection means a confection into which gas (which is not limited to air, but includes carbon dioxide or any other suitable gas or mixture of gases) has been introduced in the form of small bubbles.

Stabilisers are defined as in Arbuckle, W.S., Ice Cream, 4th Edition, AVI publishing 1986, chapter 6, pages 84-92. Stabilisers include proteins such as gelatin; plant extrudates such as gum arabic, gum ghatti, gum karaya, gum tragacanth; seed gums such as locust bean gum, guar gum, psyyllium seed gum, quince seed gum or tamarind seed gum; seaweed extracts such as agar, alginates, carrageenan or furcelleran; pectins such as low methoxyl or high methoxyl-type pectins; cellulose derivatives such as sodium carboxymethyl cellulose, microcrystalline cellulose, methyl and methylethyl celluloses, or hydroxylpropyl and hydroxypropylmethyl celluloses; and microbial gums such as dextran, xanthan or β-1,3-glucan.

Some stabilisers have the ability to form gels under certain conditions. These include locust bean gum, which can form a gel when a mix containing it at a sufficiently high concentration is frozen; sodium alginate and low methoxy pectin, which can form gels on the addition of doubly charged cations such as calcium; κ-carrageenan, which can form a gel after heating and cooling in the presence of cations such as potassium or calcium ions; carrageenans can also form gels in combination with milk proteins and locust bean gum; high methoxy pectin, which can gel at low pH and in the presence of high concentrations of sugar; and gelatin forms a gel when heated and cooled. Some mixtures of stabilisers (which do not necessarily separately form gels) can also combine to form gels (under appropriate conditions) such as a mixture of xanthan and locust bean gum.

All percentages given below, with the exception of overrun, are on a weight / weight basis, unless otherwise stated.

Density measurement method 1

2 litres of cold water (4°C) in a beaker is placed on a balance. The balance is then tared. A piece of frozen confection (typically approximately 20g) is placed on the balance next to the beaker and weighed ($m_1$). The piece is then held below the surface of the water in the beaker, taking care not to touch the sides or bottom of the beaker. The reading of the balance is recorded ($m_2$). By Archimedes' principle, the difference between the readings of the balance before and after immersion of the frozen confection is equal to density of water multiplied by the volume of water displaced:

$$(m_2 - m_1) = density.of.water \times volume$$,

The volume of the displaced water is the volume of the piece of frozen confection. The density of the frozen confection is its mass ($m_1$) divided by its volume.

Density measurement method 2 for a plurality of small discrete frozen pieces

A 100ml volumetric flask is weighed ($m_3$). 40 - 50g small discrete frozen pieces are placed in the flask and the flask is re-weighed ($m_4$). Cold water (4°C) is then added to fill the flask to the 100ml volume line (the frozen pieces jam together below at neck of the flask and are therefore prevented from rising to the surface) and the flask is weighed again ($m_5$).

| | | |
|---|---|---|
| Mass of the frozen pieces (g) | = | ($m_4$-$m_3$) |
| Volume of the frozen pieces (ml) | = | (100-volume of water) |
| | = | 100-(mass of water/density of water) |
| | = | 100-(($m_5$-$m_4$)/1gml$^{-1}$) |
| Density of the frozen pieces (gml$^{-1}$) | = | ($m_4$-$m_3$) / (100 - ($m_5$-$m_4$)) |

Calculation of overrun

First, the density of the frozen unaerated mix is determined. To measure the density of an unaerated mix starting from an aerated product, the sample is allowed to melt and gently stirred. The melted sample is then placed under a low vacuum in a vacuum oven at room temperature for 5-10 minutes in order to remove the gas bubbles. The de-aerated sample is then re-frozen and its density measured as described in method 1 above.

The overrun is calculated from the measured densities of the frozen unaerated mix and the frozen aerated product.

overrun (%) = [(density frozen unaerated) – (density frozen aerated)] / (density frozen aerated) x 100

Free flow test

A large number of approximately spherical discrete frozen pieces (each having a typical volume of a few millilitres) are filled from the base into a cylindrical type cup (height 95 mm, bottom outside diameter 63 mm, top outside diameter 46mm) to a fill weight of 85 g. The base is then sealed on with an iron. Samples are held at -25°C for 30 days. The test is performed by squeezing the pot manually, then opening and upturning it. The flow properties of the contents are assessed on a 5 point scale according to which:

1 = particles exit pot and are completely free flowing.

2 = if particles do not exit at 1, pot is re-closed and inverted 5 times to separate the particles, which exit when the lid is opened and upturned.

3 = as 2 but two gentle squeezes to the sides are additionally required before particles will exit. No residual deformation of the pack is seen.

4 = as 3 but two harder squeezes are required which will deform the pack, leaving it still deformed after the particles are removed.

5 = particles cannot be made to exit.

A squeeze score of 3 is considered the maximum in terms of acceptable flowability. The scores are quoted as the mean values of the scores obtained for six replicate samples.

## Description of the invention

It has now been found that it is possible to produce quiescently frozen aerated confections when the aerating gas is generated as freezing takes place. The formation of ice stabilises the gas bubbles, provided that substantial gas generation occurs simultaneously with the formation of ice. This includes the possibility that gas generation is initiated before ice begins to form, provided that it continues during at least part of the quiescent freezing process.

In a first aspect the present invention provides a method for producing a frozen confection having an overrun of at least 15%, which method comprises quiescently freezing a mix containing a carbon dioxide generating composition, characterised in that the mix does not comprise a gel.

Preferably the carbon dioxide generating composition comprises an acid and a carbonate. Preferably, the acid is a weak organic acid such as citric acid, lactic acid, malic acid, ascorbic acid, tartaric acid, acetic acid or succinic acid, or an inorganic acid such as hydrochloric acid, phosphoric acid or sulphuric acid. Most preferably, the acid is a food grade organic acid such as citric acid, malic acid, ascorbic acid, lactic acid, succinic acid or tartaric acid. Mixtures of two or more different acids may be used. The carbonate is any suitable carbonate or bicarbonate with any suitable cation. Examples of suitable cations include metal ions such as calcium, potassium and sodium. Preferably the carbonate is a food grade material that is insoluble in water. Quiescent freezing is a relatively slow process. It is important that the carbon dioxide generating composition should not be used up too quickly, so that little or no carbon dioxide is generated during the quiescent freezing process. It has been found that a carbon dioxide composition comprising an acid and a carbonate can be prevented from being used up too quickly by providing the carbonate in the form of particles of a carbonate salt with low solubility. Accordingly, particularly preferred carbonates are carbonate salts with solubility constants in water of $10^{-8}$ or less. Mixtures of two or more carbonates may be used. Most preferably the carbonate is calcium carbonate.

Sufficient acid and carbonate are required to generate the desired overrun. The type and amount of acid and carbonate are selected such that the overrun generated in the final frozen product is preferably at least 25%, more preferably at least 40%, without using other methods of aeration. However, the presence of excessive amounts of carbonates can impart an unpleasant taste to the product. Preferably, the carbonate content is from 0.1 wt% to 5 wt%, more preferably from 0.5 wt% to 2 wt%. The molar ratio of acid to carbonate is selected so as to have sufficient acid to react with the carbonate present in the premix and generate carbon dioxide to provide the desired overrun.

Preferably the frozen confection is a water ice, a milk ice or a frozen yoghurt. Most preferably the frozen confection is a water ice.

Preferably the total solids content is at least 6 wt%, more preferably at least 8, 10, 15 or 20 wt% and may be as high as 35 wt%. Preferably the total solids content is less than 35 wt%, more preferably less than 25 wt%.

Preferably the mix contains less than 1% stabiliser, more preferably less than 0.3%, most preferably less than 0.1 %.

Preferably the mix contains less than 5% fat, more preferably less than 3% fat, most preferably less than 1 % fat.

Preferably the mix contains less than 5% protein, more preferably less than 3% protein, most preferably less than 1% protein.

Preferably the mix comprises a foaming agent. Suitable foaming agents are milk proteins and egg white.

Preferably carbon dioxide generation begins before the mix is quiescently frozen. It has been found that the overrun can be increased by causing carbon dioxide generation to occur for some time before quiescent freezing, provided that the carbon dioxide generating composition is not used up during this time.

Preferably the mix is partially slush frozen before it is quiescently frozen. Partial slush freezing can be achieved with relatively simple and inexpensive equipment, for example a home ice cream maker. Partial slush freezing can take place before or during generation of the carbon dioxide, provided that the carbon dioxide generating composition is not used up before quiescent freezing. Partial slush freezing increases the viscosity of the mix and thereby helps to delay the escape of the carbon dioxide from the partially slush frozen mix. Alternatively the mix is not partially slush frozen.

Preferably the mix is placed in a mould or package for quiescent freezing. Alternatively, the mix is quiescently frozen by immersion in liquid nitrogen.

One type of water ice product consists of a plurality of discrete frozen pieces packaged together, for example in a tub. Such pieces are produced by dripping a mix through small nozzles into a bath of liquid nitrogen (described in WO96/29896). It has been found that by using the method of the present invention, it is possible to aerate discrete water ice pieces produced by dripping a mix containing a carbon dioxide generating composition into liquid nitrogen. Preferably the discrete water ice pieces have an overrun of at least 2%. It has been found that discrete aerated water ice pieces produced according to the present invention have improved storage stability as evidenced by their flowability.

## Examples

The present invention will be further described with reference to the following examples, which are illustrative only.

A simple water ice mix was prepared with the following formulation:

| Ingredient | Amount (% w/w) |
|---|---|
| Sucrose | 20.0 |
| Colour and Flavour | 0.10 |
| Citric acid | 2.00 |
| Water | to 100 |

The water was heated to about 70°C. The dry ingredients were then added and the mix was stirred for several minutes as it was further heated to 82°C and pasteurised by holding it at this temperature for at least 30 seconds. The mix was then cooled to 5°C until required. Some of the mix was frozen (without aeration) and the density of the frozen unaerated mix was measured by method 1 described above.

### Example 1

1% (w/w) calcium carbonate particles was added to the mix as follows. The calcium carbonate particles were supplied by Provencale s.a. (B.P. 97 F- 83172, Brignoles Cedex, France) with code name Mikhart SPL, and had a mean size of 20$\mu$m. The calcium carbonate was weighed out into a beaker and approximately 100ml of water was added and stirred to make a slurry. The slurry was then stirred into the rest of the mix. The acidic mix reacted with the calcium carbonate, and within a few minutes bubbles of carbon dioxide were apparent. The mix was poured into moulds, which were placed in a blast freezer at -32°C. After the mix had frozen the samples were held at -25°C overnight.

Pieces (weighing approximately 20g) were cut from the frozen samples, in order to measure their overrun using method 1 described above. The overrun was measured to be 23%, i.e. an aerated water ice was produced.

### Example 2

A second mix was prepared with the following formulation.

| Ingredient | Amount (% w/w) |
|---|---|
| Sucrose | 20.0 |
| Colour and Flavour | 0.10 |

(continued)

| Ingredient | Amount (% w/w) |
|---|---|
| Citric acid | 2.00 |
| Hyfoama DS | 0.10 |
| Locust bean gum | 0.25 |
| Water | to 100 |

Hyfoama DS is a hydrolysed enzymatically solubilised milk protein (casein) available from Quest, Bromborough, UK. The small amounts of locust bean gum and Hyfoama DS were added so that the formulation was representative of a commercial water ice formulation. The mix was divided into four parts, each of approximately 5 litres.

1% (w/w) calcium carbonate particles was added to the first part (Example 2) as described in Example 1. The acidic mix reacted with the calcium carbonate, and within a few minutes bubbles of carbon dioxide were apparent. The mix was poured into moulds, which were placed in a freezer until the mix was frozen. Two different freezers were used, one at -25°C and a blast freezer at -32°C.

Comparative examples A and B were produced by adding gelling stabilisers to the mix. 1 % (w/w) gelatin was added to the second part (Comparative Example A). 1% (w/w) of a 50/50 mix of xanthan and locust bean gum was added to the third part (Comparative Example B). In each case the stabilisers were weighed out into a beaker and added to the mix. The mix was then warmed to 65°C for 30 minutes to allow the stabilisers to dissolve. The mixes were then cooled to 5°C, whipped to incorporate air (approximately 50% and 25% overrun respectively), poured into moulds and frozen at -25°C. The fourth part of the mix was whipped and poured into moulds without any further additions and then frozen at -25°C (Comparative Example C).

The moulds were removed from the freezers and pieces (weighing approximately 20g) were cut from the frozen samples, in order to measure their overrun, using method 1 described above. The results are shown in Table 1.

Table 1

| | Example 2 | | Comparative Examples | | |
|---|---|---|---|---|---|
| | Blast freezer | -25°C | A | B | C |
| Overrun (%) | 26 | 43 | 45 | 22 | 6 |

Table 1 shows that the samples according to the invention (Example 2) had overruns of at least 26%, i.e. aerated water ices were produced. Comparative examples A and B also had significant overruns. However, these samples had an unpleasant chewy, gummy texture. Comparative example C without the carbon dioxide generating composition had only a very low overrun.

The two different freezing regimes used for Example 2 produce different rates of ice formation. The faster freezing regime (the blast freezer) allows less time for the generation of carbon dioxide as the ice is formed, and so produces products with lower overrun.

Example 3

In another embodiment of the invention, the mix was partially slush frozen before carbon dioxide generation was caused to occur. A mix was prepared as described in Example 2. Frozen products according to the invention were prepared by partially slush freezing the mix in a scraped surface heat exchanger. Although the mix was not subjected to deliberate aeration, a low level of aeration (less than 10% overrun) occurs as the mix is pumped through the scraped surface heat exchanger. The partially frozen mix was then drawn at about -3.5°C. 1% w/w calcium carbonate particles with mean size 20$\mu$m were added into the partially frozen mix as follows. The calcium carbonate was weighed out into a beaker and approximately 100ml of water was added with stirring to make a slurry. The slurry was then stirred into the rest of the mix. The acidic mix reacted with the calcium carbonate, and within 10 minutes there was a noticeable increase in volume due to the generation of the carbon dioxide. The partially frozen mix was divided into four parts which were left to stand in a room at 2°C for 20, 30, 40 and 60 minutes to allow carbon dioxide generation to proceed. The partially frozen mix was then poured into moulds which had been pre-cooled to -25°C (in order to prevent the melting of the ice). The filled moulds were finally placed in a freezer at -25°C.

Aerated products were produced. The overruns of the products were measured using method 1 described above and are shown in Table 2. Higher overruns were produced when carbon dioxide generation was allowed to proceed for a period of time before the mix was completely frozen.

Table 2

| Time (mins) | 20 | 30 | 40 | 60 |
|---|---|---|---|---|
| Overrun (%) | 23 | 29 | 38 | 41 |

Example 4

Frozen products according to the invention were also prepared by an alternative process. A mix was made as described in Example 2. 1% w/w calcium carbonate particles with mean size 20$\mu$m were added into the mix at 5°C as follows. The calcium carbonate was weighed out into a beaker and approximately 100ml of water was added with stirring to make a slurry. The slurry was then stirred into the rest of the mix. The acidic mix reacted with the calcium carbonate. The mix was divided into three parts which were left to stand at room temperature for 1, 12 and 50 minutes to allow carbon dioxide generation to occur. The mix was then partially slush frozen in a scraped surface heat exchanger and drawn at about -3.5°C. The partially frozen mix was then immediately poured into pre-cooled moulds and placed in a blast freezer at -32°C for three hours, and finally transferred to a freezer at -25°C.
Aerated products were produced. The overruns of the products were measured using method 1 described above and are shown in Table 3. Higher overruns were produced when carbon dioxide generation was allowed to proceed for a period of time before the mix was partially slush frozen.

Table 3

| Time (mins) | 1 | 12 | 50 |
|---|---|---|---|
| Overrun (%) | 15 | 30 | 40 |

Example 5

Frozen products according to the invention were prepared as in Example 3, but using different amounts (0.5, 1, 2, 4% w/w) of calcium carbonate particles. The partially frozen mix was poured into moulds after waiting for 20 minutes, and placed in a freezer at -25°C overnight. The overruns were measured using method 1 described above and are shown in Table 4.

Table 4

| Amount of calcium carbonate (% w/w) | 0.5 | 1.0 | 2.0 | 4.0 |
|---|---|---|---|---|
| Overrun (%) | 17 | 25 | 36 | 41 |

Aerated products were produced in each case. Higher overruns were produced with higher concentrations of calcium carbonate.
The above examples demonstrate that the overrun of the product can be varied by altering the balance between the rate of carbon dioxide generation and the rate of ice formation, for example by altering the amount of carbonate or acid, or by altering the freezing process. Other methods of altering these rates will be apparent to those skilled in the art, for example by changing the particle size.

Example 6

A mix was prepared using the following formulation (i.e. without any acid):

| Ingredient | Amount (% w/w) |
|---|---|
| Sucrose | 20.0 |
| Colour and Flavour | 0.10 |
| Hyfoama DS | 0.10 |
| Locust bean gum | 0.25 |

(continued)

| Ingredient | Amount (% w/w) |
|---|---|
| Water | to 100 |

It was split into 3 parts: citric acid was added to the first part, so that it had a concentration of 4% w/w; calcium carbonate was added to the second (to a concentration of 2% w/w), and citric acid (to a concentration of 2% w/w) was added to the third.

The first and second mixes were loaded at 5°C into two separate chambers which each fed into a third chamber. The third chamber was situated above a bath of liquid nitrogen, into which mix could be dropped via a dripping nozzle of 1mm internal diameter. The flow out of each chamber was controlled by taps. The taps on the first two chambers were opened so that the mixes flowed out of them in to the third chamber at the same rate. As a result, the third chamber contained a 50:50 mixture of the two mixes, with overall calcium carbonate and citric acid concentrations of 1% and 2% respectively. The tap on the third chamber was initially closed. The acid reacted with the calcium carbonate, and within a few minutes bubbles of carbon dioxide were apparent. After waiting for 10 minutes to allow a head to build up, the tap on the third chamber was opened so that drops of mix fell from the nozzle Into liquid nitrogen where they were rapidly frozen into aproximately spherical pieces with diameters of about 3mm. The rate of flow out of the third chamber was arranged to match the rate of flow into it so that a constant head was maintained. Shortly before the mixes in the first two tanks ran out, the pieces of frozen water ice were collected from the liquid nitrogen bath, placed into pots, held overnight at - 10°C and then stored at -25°C (Example 6).

The third mix was loaded at 5°C into a chamber of 5 litres capacity which fed directly into a dripping nozzle of 1 mm internal diameter situated above a bath of liquid nitrogen. Drops of mix fell from the nozzle into liquid nitrogen where they were rapidly frozen into approximately spherical pieces with diameters of about 3mm. These were collected from the liquid nitrogen bath, placed into pots, held overnight at -10°C and then stored at -25°C. Since the mix did not contain calcium carbonate, no carbon dioxide was generated (Comparative Example D).

The overrun of the water ice pieces was measured using method 2 described above and is given in Table 5.

Table 5

| | Example 6 | Comparative Example D |
|---|---|---|
| Overrun | 4.0 | 0.0 |

Comparative example D had an overrun of 0%; in this case, unlike the scraped surface heat exchanger, no unintentional aeration occurs during the process. Even though their overrun was relatively low, the discrete frozen pieces of Example 6 were noticeably softer than those of Comparative Example D when eaten. After 30 days storage at 25°C, the discrete frozen pieces of Example 6 scored 2 on the free flow test described above, whereas those of Comparative example D had a score of 3 and were noticeably less free-flowing and more sintered. Thus it is apparent that the discrete frozen pieces produced according to the invention have improved storage stability, as evidenced by better flowability after storage at -25°C than the corresponding product which lacks the carbon dioxide generating composition.

The various features and embodiments of the present invention, referred to in individual sections above apply, as appropriate, to other sections, *mutatis mutandis.* Consequently features specified in one section may be combined with features specified in other sections, as appropriate.

**Claims**

1. A method for producing a frozen confection having an overrun of at least 15%, which method comprises quiescently freezing a mix containing a carbon dioxide generating composition, **characterised in that** the mix does not comprise a gel.

2. A method according to claim 1 wherein the frozen confection has an overrun of at least 25%, preferably 40%.

3. A method according to claim 1 or claim 2 wherein the mix contains less than 1% stabiliser, preferably less than 0.3%.

4. A method according to any preceding claim wherein the frozen confection is a water ice.

5. A method according to any preceding claim wherein the carbon dioxide generating composition comprises an acid and a carbonate.

6.  A method according to claim 5 wherein the acid is a food grade organic acid such as citric acid, malic acid, ascorbic acid, lactic acid, succinic acid or tartaric acid.

7.  A method according to claim 5 or claim 6 wherein the carbonate is a food grade material that is insoluble in water.

8.  A method according to claim 7 wherein the carbonate is calcium carbonate.

9.  A method according to any preceding claim wherein the mix is quiescently frozen in a mould.

10. A method according to any preceding claim wherein the mix is partially slush frozen before it is quiescently frozen.

11. A method according to claim 10 wherein carbon dioxide generation is caused to occur before the mix is partially slush frozen.

12. A method according to claim 10 wherein carbon dioxide generation is caused to occur after the mix is partially slush frozen and before it is quiescently frozen.

13. A method according to any of claims 1 to 9 wherein the mix is not partially slush frozen.

14. A method according to any preceding claim wherein the mix is quiescently frozen by immersion in liquid nitrogen

**Patentansprüche**

1.  Verfahren zum Herstellen eines gefrorenen Konfekts mit einem Überlauf von mindestens 15%, welches Verfahren ruhendes Gefrieren eines Gemisches umfasst, welches eine Kohlendioxid erzeugende Zusammensetzung enthält, **dadurch gekennzeichnet, dass** das Gemisch kein Gel umfasst.

2.  Verfahren gemäß Anspruch 1, worin das gefrorene Konfekt einen Überlauf von mindestens 25%, vorzugsweise 40% hat.

3.  Verfahren gemäß Anspruch 1 oder Anspruch 2, worin das Gemisch weniger als 1% Stabilisator, vorzugsweise weniger als 0,3% enthält.

4.  Verfahren gemäß einem vorhergehenden Anspruch, worin das gefrorene Konfekt ein Wassereis ist.

5.  Verfahren gemäß einem vorhergehenden Anspruch, worin die Kohlendioxid erzeugende Zusammensetzung eine Säure und ein Carbonat umfasst.

6.  Verfahren gemäß Anspruch 5, worin die Säure eine nahrungsmittelgeeignete organische Säure wie Zitronensäure, Äpfelsäure, Ascorbinsäure, Milchsäure, Bernsteinsäure oder Weinsäure ist.

7.  Verfahren gemäß Anspruch 5 oder Anspruch 6, worin das Carbonat ein nahrungsmittelgeeignetes Material ist, das in Wasser unlöslich ist.

8.  Verfahren gemäß Anspruch 7, worin das Carbonat Calciumcarbonat ist.

9.  Verfahren gemäß einem vorhergehenden Anspruch, worin das Gemisch ruhend in einer Form gefroren wird.

10. Verfahren gemäß einem vorhergehenden Anspruch, worin das Gemisch teilweise schlammgefroren wird, bevor es ruhend gefroren wird.

11. Verfahren gemäß Anspruch 10, worin Kohlendioxiderzeugung veranlasst wird sich zu ereignen, bevor das Gemisch teilweise schlammgefroren wird.

12. Verfahren gemäß Anspruch 10, worin Kohlendioxiderzeugung veranlasst wird sich zu ereignen, nachdem das Gemisch teilweise schlammgefroren wird und bevor es ruhend gefroren wird.

13. Verfahren gemäß einem der Ansprüche 1 bis 9, worin das Gemisch nicht teilweise schlammgefroren wird.

14. Verfahren gemäß einem vorhergehenden Anspruch, worin das Gemisch durch Eintauchen in flüssigen Stickstoff ruhend gefroren wird.

## Revendications

1. Procédé de production d'une confiserie glacée ayant un foisonnement d'au moins 15 %, ledit procédé comprenant le fait de congeler dans des conditions de quiescence un mélange contenant une composition générant du dioxyde de carbone, **caractérisé en ce que** le mélange ne comprend pas de gel.

2. Procédé selon la revendication 1, dans lequel la confiserie congelée a un foisonnement d'au moins 25 %, mieux de 40 %.

3. Procédé selon la revendication 1 ou la revendication 2, dans lequel le mélange contient moins de 1 % de stabilisateur, mieux moins de 0,3 %.

4. Procédé selon l'une quelconque des revendications précédentes, dans lequel la confiserie glacée est une glace à l'eau.

5. Procédé selon l'une quelconque des revendications précédentes, dans lequel la composition générant du dioxyde de carbone comprend un acide et un carbonate.

6. Procédé selon la revendication 5, dans lequel l'acide est un acide organique de grade alimentaire comme l'acide citrique, l'acide malique, l'acide ascorbique, l'acide lactique, l'acide succinique ou l'acide tartrique.

7. Procédé selon la revendication 5 ou la revendication 6, dans lequel le carbonate est un matériau de grade alimentaire non hydrosoluble.

8. Procédé selon la revendication 7, dans lequel le carbonate est du carbonate de calcium.

9. Procédé selon l'une quelconque des revendications précédentes, dans lequel le mélange est congelé dans un moule dans des conditions de quiescence.

10. Procédé selon l'une quelconque des revendications précédentes, dans lequel le mélange est partiellement congelé en une glace concassée avant d'être congelé dans des conditions de quiescence.

11. Procédé selon la revendication 10, dans lequel la génération de dioxyde de carbone s'opère avant que le mélange ne soit partiellement congelé en une glace concassée.

12. Procédé selon la revendication 10, dans lequel la génération de dioxyde de carbone s'opère après que le mélange a été partiellement congelé en une glace concassée et avant qu'il ne soit congelé dans des conditions de quiescence.

13. Procédé selon l'une quelconque des revendications 1 à 9, dans lequel le mélange n'est pas partiellement congelé en une glace concassée.

14. Procédé selon l'une quelconque des revendications précédentes, dans lequel le mélange est congelé de manière quiescente par immersion dans de l'azote liquide.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6187365 B
- US 20030104004 A
- JP 62296851 A
- WO 9629896 A

### Non-patent literature cited in the description

- **ARBUCKLE, W.S.** *Ice Cream,* 1986, 84-92